# EUROPEAN PATENT APPLICATION

(11) **EP 2 533 585 A1**
(43) Date of publication of application: **12.12.2012**
(21) Application number: 11736838.1
(22) Date of filing: 11.01.2011
(51) Int. Cl.: H04W 56/00, H04B 15/00, H04W 84/12

(54) **WIRELESS BASE STATION, TRANSMISSION METHOD, PROGRAM**

(30) Priority: 01.02.2010 JP 2010020530
(71) Applicant: NEC Corporation, Tokyo 108-8001 (JP)
(72) Inventor: NISHIMURA, Yasunori, Tokyo 108-8001 (JP)
(74) Representative: Vossius & Partner
(86) International application number: PCT/JP2011/050276
(87) International publication number: WO 2011/093123

(57) **Abstract**

The present invention is applied to a base station for periodically transmitting a transmission signal to a terminal. The base station includes: a transmitter/receiver that receives a reception signal; a noise verifier that outputs information regarding a generation time and a generation period of the noise that is periodically generated if the reception signal includes the noise; and a transmission timing determiner that determines setting a transmission period of the transmission signal to the same period as the generation period of the noise based on the information regarding the generation time and the generation period of the noise that is output from the noise verifier and shifting a start position of the transmission period by a predetermined time from an arbitrary generation time of the noise, wherein the transmitter/receiver transmits the transmission signal to the terminal at transmission timing of the transmission signal determined by the transmission timing determiner.

## Description

### Technical Field

The present invention relates to a wireless base station, a transmission method, and a program.

### Background Art

An access point (hereinafter referred to as "AP") that serves as a wireless base station of a wireless LAN (Local Area Network) periodically transmits a synchronization signal (beacon signal).

A terminal (hereinafter referred to as "STA") needs to receive a beacon signal transmitted from the AP for time synchronization with the AP.

However, when a noise source (such as a microwave) that generates periodical noise is present in the vicinity, the beacon signal is interfered with the noise, and the STA may not receive the beacon signal. In this case, the STA cannot be kept in connection with the AP.

Examples of a technique of preventing the noise interference include Patent Literatures 1 and 2 that describe techniques of communication at a frequency band in which there is no interference by the source of the noise.

Therefore, if the AP utilizes the techniques described in Patent Literatures 1 and 2 to use the frequency band in which there is no interference by the source of the noise to transmit the beacon signal, the STA may be able to receive the beacon signal from the AP to remain in connection with the AP.

### Citation List

### Patent Literature

Patent Literature 1: JP2004-165950A
Patent Literature 2: JP2004-266664A

### Summary of Invention

### Technical Problem

However, the frequency band allocated to a wireless base station is defined in the field of wireless communication. Therefore, the wireless base station may not be able to transmit the beacon signal at a frequency band in which there is no interference by the source of the noise.

An object of the present invention is to provide a wireless base station, a transmission method, and a program that can surely keep a terminal in connection with a wireless base station, even in an environment where noise is periodically generated.

### Solution to Problem

The present invention provides a wireless base station for periodically transmitting a transmission signal to a terminal, the wireless base station including:
a transmitter/receiver that receives a reception signal;
a noise verifier that outputs information regarding a generation time and a generation period of the noise that is periodically generated if the reception signal includes the noise; and
a transmission timing determiner that determines setting a transmission period of the transmission signal to the same period as the generation period of the noise based on the information regarding the generation time and the generation period of the noise that is output from the noise verifier and determines shifting a start position of the transmission period by a predetermined time from an arbitrary generation time of the noise, wherein
the transmitter/receiver transmits the transmission signal to the terminal at transmission timing of the transmission signal determined by the transmission timing determiner.

The present invention provides a transmission method for a wireless base station to periodically transmit a transmitter signal to a terminal, the transmission method including the steps of:
verifying noise to output information regarding a generation time and a generation period of the noise that is periodically generated if a reception signal received by the wireless base station includes the noise;
determining transmission timing to determine to set a transmission period of the transmission signal to the same period as the generation period of the noise based on the information regarding the generation time and the generation period of the noise and to shift a start position of the transmission period by a predetermined time from an arbitrary generation time of the noise; and
transmitting the transmission signal to the terminal at transmission timing of the determined transmission signal.

The present invention provides a program causing a wireless base station for periodically transmitting a transmission signal to a terminal to execute the procedures of:
verifying noise to output information regarding a generation time and a generation period of the noise that is periodically generated if a reception signal received by the wireless base station includes the noise;
determining transmission timing to determine to set a transmission period of the transmission signal to the same period as the generation period of the noise based on the information regarding the generation time and the generation period of the noise and to shift a start position of the transmission period by a predetermined time from an arbitrary generation time of the noise; and
transmitting the transmission signal to the terminal at transmission timing of the determined transmission signal.

### Advantageous Effect of Invention

The wireless base station of the present invention is configured to set the transmission period of the transmission signal to the same period as the generation period of the noise that is periodically generated if the reception signal received by the wireless base station includes the noise and to shift the start position of the transmission period by the predetermined time from the arbitrary generation time of the noise.

As a result, the wireless base station can avoid the generation timing of the noise to transmit the transmission signal. Therefore, the terminal can receive the transmission signal from the wireless base station, and can advantageously be kept in connection with the wireless base station more surely.

### Brief Description of Drawings

Figure 1 is a diagram showing a configuration of a wireless LAN system including a wireless base station of the present invention.
Figure 2 is a diagram showing an example of noise that is periodically generated.
Figure 3 is a diagram showing an example of transmission timing of a beacon signal of the wireless base station according to a first exemplary embodiment.
Figure 4 is a block diagram showing a configuration of the wireless base station according to first and second exemplary embodiments.
Figure 5 is a diagram showing an example of transmission timing of a beacon signal of the wireless base station according to the second exemplary embodiment.
Figure 6 is a block diagram showing a configuration of the wireless base station according to a third exemplary embodiment.

### Description of Embodiments

(1) First Exemplary Embodiment

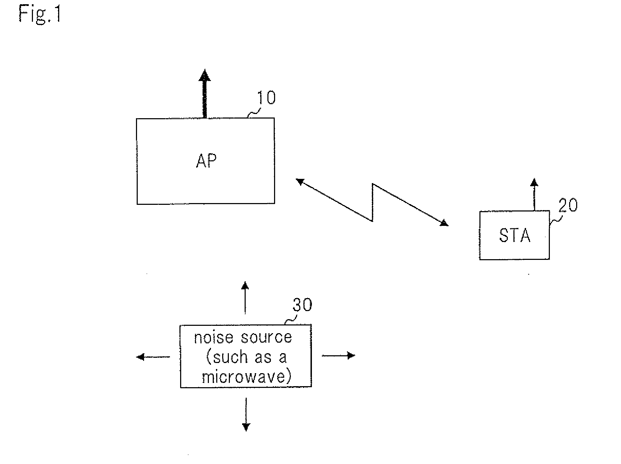

As shown in Figure. 1, AP 10 in a wireless LAN system periodically transmits a beacon signal to STA 20. STA 20 needs to receive the beacon signal from AP 10 for time synchronization with AP 10.

In the wireless LAN system, a transmission period of the beacon signal of AP 10 may be set to 20 ms.

Meanwhile, a generation period of noise of noise source 30, such as a microwave, may depend on a power frequency. For example, the generation period of noise may be 20 ms when the power frequency is 50 Hz AC.

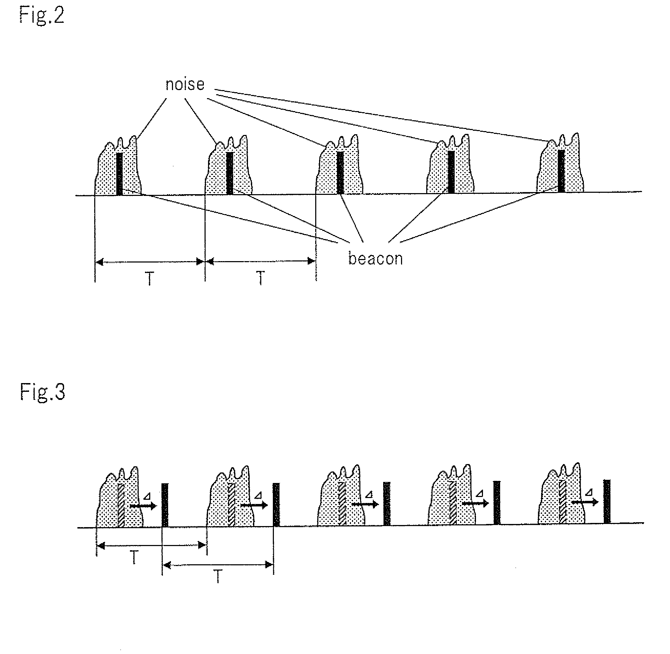

In this case, the beacon signal always is interfered with the noise if transmission timing of the beacon signal overlaps with the generation section of the noise as shown in Figure 2. As a result, STA 20 cannot receive the beacon signal from AP 10, and has difficulty to remain in connection with AP 10.

Therefore, in the present exemplary embodiment, AP 10 sets the transmission period of the beacon signal to a period T that is the same as a generation period T of the noise as shown in Figure 3. AP 10 also shifts a start position of the transmission period by a predetermined time Δ from an arbitrary generation time of the noise.

In this way, AP 10 can avoid generation timing of the noise to transmit the beacon signal. Therefore, STA 20 can receive the beacon signal from AP 10 and can more surely be kept in connection with AP 10.

AP 10 will be described in detail.

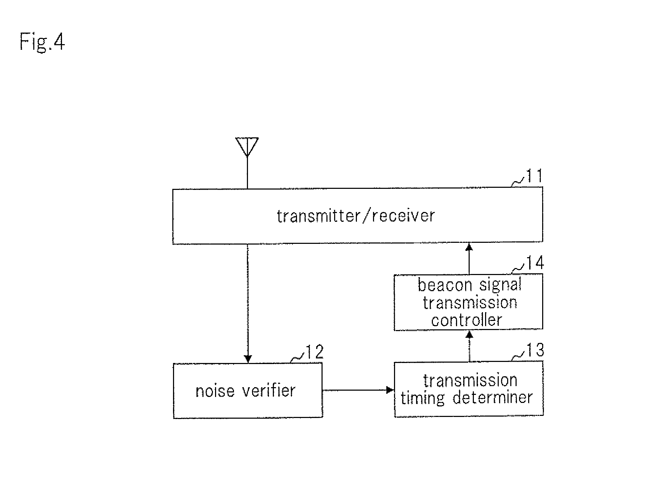

As shown in Figure 4, AP 10 of the present exemplary embodiment includes transmitter/receiver 11, noise verifier 12, transmission timing determiner 13, and beacon signal transmission controller 14.

Transmitter/receiver 11 receives an arbitrary signal

Noise verifier 12 verifies whether a reception signal received by transmitter/receiver 11 includes noise that is periodically generated. An example of the verification method includes a method of verifying presence/absence of noise based on demodulation possibility or the like in each communication system and recording the time as generation time of the noise to verify whether the noise is a noise that is periodically generated based on the generation time of the noise.

If the noise that is periodically generated is included, noise verifier 12 outputs information regarding the generation period and the generation time of the noise to transmission timing determiner 13.

Based on the information regarding the generation period and the generation time of the noise that is output from noise verifier 12, transmission timing determiner 13 determines to set the transmission period of the beacon signal to the period T that is the same as the generation period T of the noise and to shift the start position of the transmission period by the predetermined time Δ from an arbitrary generation time of the noise.

At transmission timing determined by transmission timing determiner 13, beacon signal transmission controller 14 instructs transmitter/receiver 11 to transmit the beacon signal.

In response to the instruction from beacon signal transmission controller 14, transmitter/receiver 11 transmits the beacon signal to STA 20.

An operation of AP 10 of the present exemplary embodiment will be described.

When transmitter/receiver 11 receives the reception signal, noise verifier 12 verifies whether the reception signal includes noise that is periodically generated, and if the noise that is periodically generated is included, outputs the information regarding the generation period and the generation time of the noise.

Based on the information regarding the generation period and the generation time of the noise that is output from noise verifier 12, transmission timing determiner 13 determines setting the transmission period of the beacon signal to the period T that is the same as the generation period T of the noise and determines shifting the start position of the transmission period by the predetermined time Δ from an arbitrary generation time of the noise.

At the transmission timing determined by transmission timing determiner 13, beacon signal transmission controller 14 instructs transmitter/receiver 11 to transmit the beacon signal, and transmitter/receiver 11 transmits the beacon signal to STA 20.

In this way, AP 10 can avoid the generation timing of the noise to transmit the beacon signal. Therefore, STA 20 can receive the beacon signal and can more surely be kept in connection with the AP.

### (2) Second Exemplary Embodiment

The configuration of AP 10 of the present exemplary embodiment is the same as that in the first exemplary embodiment.

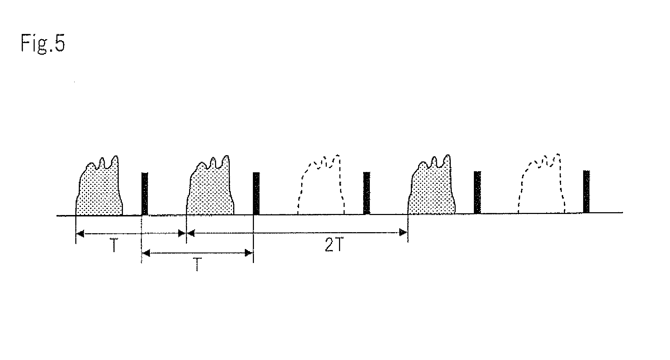

Although the generation period of the noise shown in Figure 2 is constant, the noise may be intermittently thinned out and generated as shown in Figure 5, instead of being generated at the constant period.

In AP 10 of the present exemplary embodiment, noise verifier 12 continues sampling the reception signal for a certain time even in such a case.

In this case, if the generation period of the noise is an arbitrary integral multiple (one or two times in the example of Figure 5) of a minimum generation period T, noise verifier 12 detects the minimum generation period T and outputs the information regarding the minimum generation period T to transmission timing determiner 13 as information regarding the generation period of the noise.

In response, transmission timing determiner 13 sets the transmission period of the beacon signal to the period T that is the same as the minimum generation period T of the noise and shifts the start position of the transmission period by the predetermined time Δ from an arbitrary generation time of the noise.

In this way, AP 10 can avoid the generation timing of the noise to transmit the beacon signal as in the first exemplary embodiment.

### (3) Third Exemplary Embodiment

AP 10 of the first and second exemplary embodiments uses the generation timing of the noise to determine the transmission timing of the beacon signal. AP 10 of the present exemplary embodiment uses not only the beacon signal, but also transmission timing of a data signal to determine the generation timing of the noise.

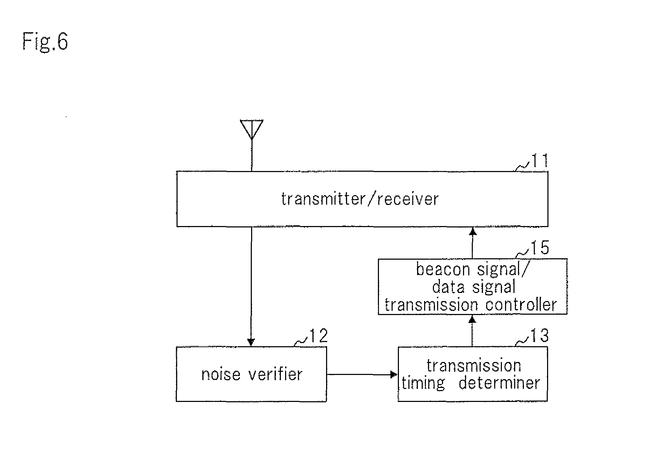

As shown in Figure 6, in AP 10 of the present exemplary embodiment, beacon signal/data signal transmission controller 15 replaces beacon signal transmission controller 14 shown in Figure 4.

Transmission timing determiner 13 sets the transmission timing of the data signal to the same transmission timing as the transmission timing of the beacon signal of the first and second exemplary embodiments.

In addition to the same function as beacon signal transmission controller 14, beacon signal/data signal transmission controller 15 has a function of instructing transmitter/receiver 11 to transmit the data signal at the transmission timing of the data signal determined by transmission timing determiner 13.

More specifically, beacon signal/data signal transmission controller 15 suspends the transmission of the data signal even if a transmission request of the data signal is received in the generation section of the noise. Beacon signal/data signal transmission controller 15 instructs transmitter/receiver 11 to transmit the data signal at the transmission timing determined by transmission timing determiner 13.

In this way, AP 10 can avoid the generation timing of the noise to transmit the data signal. This can reduce the retransmission of the data signal caused by disabling of the transmission to STA 20 due to the interference of the data signal with the noise.

Although the present invention has been described with reference to the exemplary embodiments, the present invention is not limited to the exemplary embodiments. Various changes that can be understood by those skilled in the art can be applied to the configurations and the details of the present invention within the scope of the present invention.

For example, although the exemplary embodiments have described the AP of the wireless LAN as an example of the wireless base station, the present invention is not limited to this, and a wireless base station of another communication system can also be applied.

The method implemented in the wireless base station of the present invention may be applied to a program to be executed by a computer. The program can be stored in a storage medium, and the program can be provided to the outside through a network.

This application claims the benefit of priority based on JP2010-020530A filed Feb. 1, 2010, the entire disclosure of which is hereby incorporated by reference.

## Claims

1. A wireless base station for periodically transmitting a transmission signal to a terminal, the wireless base station comprising:
a transmitter/receiver that receives a reception signal;
a noise verifier that outputs information regarding a generation time and a generation period of the noise that is periodically generated if the reception signal includes the noise; and
a transmission timing determiner that determines setting a transmission period of the transmission signal to the same period as the generation period of the noise based on the information regarding the generation time and the generation period of the noise that is output from said noise verifier and determines shifting a start position of the transmission period by a predetermined time from an arbitrary generation time of the noise, wherein
said transmitter/receiver transmits the transmission signal to the terminal at transmission timing of the transmission signal determined by said transmission timing determiner.

2. The wireless base station according to claim 1, wherein
said noise verifier
outputs information regarding a minimum generation period as the information regarding the generation period of the noise if the generation period of the noise is an arbitrary integral multiple of the minimum generation period.

3. The wireless base station according to claim 1 or 2, wherein
the transmission signal is a beacon signal.

4. The wireless base station according to any one of claims 1 to 3, wherein
the transmission signal is a data signal.

5. A transmission method for a wireless base station to periodically transmit a transmitter signal to a terminal, the transmission method comprising the steps of:
verifying noise to output information regarding a generation time and a generation period of the noise that is periodically generated if a reception signal received by the wireless base station includes the noise;
determining transmission timing to determine setting a transmission period of the transmission signal to the same period as the generation period of the noise based on the information regarding the generation time and the generation period of the noise and to determine shifting a start position of the transmission period by a predetermined time from an arbitrary generation time of the noise; and
transmitting the transmission signal to the terminal at transmission timing of the determined transmission signal.

6. The transmission method according to claim 5, wherein
in said verifying noise,
information regarding a minimum generation period is output as the information regarding the generation period of the noise if the generation period of the noise is an arbitrary integral multiple of the minimum generation period.

7. The transmission method according to claim 5 or 6, wherein
the transmission signal is a beacon signal.

8. The transmission method according to any one of claims 5 to 7, wherein
the transmission signal is a data signal.

9. A program causing a wireless base station for periodically transmitting a transmission signal to a terminal to execute the procedures of:
verifying noise to output information regarding a generation time and a generation period of the noise that is periodically generated if a reception signal received by the wireless base station includes the noise;
determining transmission timing to determine setting a transmission period of the transmission signal to the same period as the generation period of the noise based on the information regarding the generation time and the generation period of the noise and to determine shifting a start position of the transmission period by a predetermined time from an arbitrary generation time of the noise; and
transmitting the transmission signal to the terminal at transmission timing of the determined transmission signal.
